# EUROPÄISCHE PATENTSCHRIFT

(11) **EP 3 173 561 B1**
(45) Veröffentlichungstag und Bekanntmachung des Hinweises auf die Patenterteilung: **08.08.2018**
(21) Anmeldenummer: 16196532.2
(22) Anmeldetag: 31.10.2016
(51) Int. Cl.: E05F 3/12

(54) **GEHÄUSE FÜR EINEN ANTRIEB EINER TÜR ODER EINES FENSTERS**
HOUSING FOR A DRIVE OF A DOOR OR WINDOW
BOÎTIER DE COMMANDE D'UNE PORTE OU D'UNE FENÊTRE

(30) Priorität: 30.11.2015 DE 102015223748
(43) Veröffentlichungstag der Anmeldung: 31.05.2017
(73) Patentinhaber: GEZE GmbH, 71229 Leonberg (DE)
(72) Erfinder: Jung, Jürgen, 72636 Frickenhausen (DE); Hermann, Raimund, 73728 Esslingen (DE)

(56) Entgegenhaltungen:
- EP-A2- 2 388 421
- DE-A1- 4 101 640
- DE-U1-202005 002 474

## Beschreibung

Die Erfindung betrifft ein Gehäuse für einen Antrieb einer Tür oder eines Fensters nach dem Oberbegriff des Anspruchs 1.

Antriebe für Flügel einer Tür oder eines Fensters sind allgemein bekannt. Sie können als Bodentürschließer oder auch als obenliegende Tür- oder Fensterantriebe ausgebildet sein. Das Gehäuse ist zur Schmierung oder auch zur Steuerung zumindest teilweise mit einer Hydraulikflüssigkeit gefüllt. Zudem sind Überströmkanäle und Ventile für die Hydraulikflüssigkeit in den Antrieben angeordnet, die zur Steuerung des Verhaltens der Antriebe dienen. Die Antriebe können rein manuelle Antriebe oder auch automatische Antriebe sein.

Im Brandfall dehnt sich die im Gehäuse des Antriebs enthaltene Hydraulikflüssigkeit infolge der ansteigenden Temperatur aus. Dabei kann die eingeschlossene Luft die Ausdehnung der Hydraulikflüssigkeit nur bis zu einem bestimmten Volumen aufnehmen. Beim Überschreiten einer bestimmten Temperatur besteht somit die Gefahr, dass die Hydraulikflüssigkeit schlagartig aus dem Gehäuse entweicht. Um dies zu vermeiden, ist es bereits aus der DE 20 2005 002 474 U1 und der DE 41 01 640 A1 bekannt, für einen Ausgleich des entstehenden Überdrucks einen Druckausgleichsraum freizugeben, indem ein zwischen dem Hydraulikraum und dem Druckausgleichsraum sitzender druck- und/oder temperaturabhängiger Verschluss durch den Überdruck oder die Temperatur gelöst wird, wonach Hydraulikflüssigkeit in den Druckausgleichsraum fließen kann.

Der Erfindung liegt die Aufgabe zugrunde, ein Gehäuse für einen Antrieb einer Tür oder eines Fensters auszubilden, bei dem eine Druckausgleichsfunktion ermöglicht ist.

Die Aufgabe wird erfindungsgemäß durch ein Gehäuse mit den Merkmalen des Anspruchs 1 gelöst. Bevorzugte Ausführungsformen des erfindungsgemäßen Gehäuses ergeben sich aus den Unteransprüchen, der vorliegenden Beschreibung sowie der Zeichnung.

Das Gehäuse für einen Antrieb einer Tür oder eines Fensters umfasst einen Druckausgleichsraum, welcher Luft enthält oder welcher sogar von Luft evakuiert ist, und der vom Hydraulikraum durch einen druck- und/oder temperaturabhängigen Verschluss getrennt ist, der in einer Durchgangsbohrung einer Hülse vorgesehen ist, durch welche Bohrung Hydraulikflüssigkeit und/oder Luft nach dem Öffnen des Verschlusses hindurchtreten kann. Der Verschluss ist derart ausgelegt, dass er sich bei Erreichen eines bestimmten Innendrucks im Gehäuse und/oder einer bestimmten erhöhten Temperatur öffnet, wonach der Innendruck im Gehäuse abfällt.

In einer bevorzugten Ausbildung umfasst ein temperaturabhängiger Verschluss eine Schmelzsicherung. Im Brandfall wird somit durch ein Schmelzen der Schmelzsicherung der Druckausgleichsraum zum Hydraulikraum hin freigegeben, woraufhin sich die Hydraulikflüssigkeit in den Druckausgleichsraum ausdehnen kann.

Die für den Brandfall vorgesehene Druckausgleichsfunktion im Antrieb ist damit auf einfache und kostengünstige Weise realisiert.

Die Hülse ist mit mindestens einem zusätzlichen Führungskanal versehen, durch den hindurch Hydraulikflüssigkeit und/oder Luft frei hindurchtreten kann und der ausgehend von der dem Druckausgleichsraum zugewandten Kopfseite der Hülse zur Weiterführung der Hydraulikflüssigkeit und/oder Luft aus dem Druckausgleichsraum in einen Ringkanal an der Hülse oder einen aus dem Gehäuse führenden Kanal, mündet. Damit kann die Hydraulikflüssigkeit und die vorhandene Luft frei entlang der Hülse fließen, wodurch ein Druck- oder Temperaturausgleich geschaffen ist.

Der mindestens eine zusätzliche Führungskanal kann durch die Hülsenwand hindurch ausgebildet sein, in den Umfang der Hülse eingearbeitet oder auch an der gegenüberliegenden Wandung im Gehäuse direkt oder in einem Gehäuseeinsatz vorgesehen sein.

Im Ausführungsbeispiel wird zuerst der Verschluss durch den erhöhten Druck und/oder die erhöhte Temperatur geöffnet, wonach die Hydraulikflüssigkeit in den Druckausgleichsraum eintritt, und Hydraulikflüssigkeit und/oder Luft durch einen Führungskanal oder mehrere davon bei Bedarf weitergeführt wird.

Vorteilhaft sind ebenfalls zwei Führungskanäle, die versetzt zueinander angeordnet sind, so dass jeder Führungskanal Hydraulikflüssigkeit und/oder Luft führen kann. Die Luft entweicht dabei im Allgemeinen von unten nach oben. Hierfür ist es eine günstige Ausbildung, die Führungskanäle als Wendeln auszuführen, von welchen jede eine Richtung vorgibt.

Der besondere Vorteil bei um 180° versetzten Führungskanälen besteht darin, dass die Hülse ihre Aufgabe erfüllt, auch wenn das Gehäuse des Antriebs um 180° um seine Längsachse gedreht wird, wie es für einige Einbausituationen notwendig sein kann.

Im Brandfall kann sich nach einem Öffnen des druck- und/oder temperaturabhängigen Verschlusses die im Hydraulikraum enthaltene Hydraulikflüssigkeit im Druckausgleichsraum ausdehnen, so dass die Hydraulikflüssigkeit bis zu einer bestimmten Temperatur im Antrieb gehalten werden kann. Ab dem Zeitpunkt des Öffnens des druck- und/oder temperaturabhängigen Verschlusses herrscht in der Hydraulikflüssigkeit wieder Umgebungsdruck. Darüber hinaus kann auch ein Führungskanal Luft oder im Brandfall auch Hydraulikflüssigkeit aus dem Gehäuse herausführen, so dass der Druck in der Hydraulikflüssigkeit nicht so hoch wird.

Gemäß einer vorteilhaften alternativen Ausgestaltung können die Führungskanäle gezielt als Labyrinth zur oder weg von der Durchgangsbohrung ausgebildet werden, in denen Luft oder Hydraulikflüssigkeit steht, und welche bei einer Druckerhöhung im Gehäuse diese Fluide einfach abführen können.

Von Vorteil ist insbesondere auch, wenn das Labyrinth symmetrisch ausgeführt ist, so dass auch ein um 180° um die Längsachse des Gehäuses gedrehter Einbau des Antriebs möglich ist. Eine solche Lageunabhängigkeit ist insbesondere für eine alternative Montage auf der Bandseite bzw. der Bandgegenseite einer Tür oder eines Fensters oder für die wahlweise Montage auf dem Flügel oder auf dem Rahmen von Vorteil.

Eine zusätzliche Möglichkeit für den Druckausgleich besteht darin, im Gehäuse ein nach der Befüllung mit Hydraulikflüssigkeit mit einem definierten Luftvolumen gefüllten, separat ausgebildeten Raum vorzusehen, der mit dem Hydraulikraum verbunden ist. So kann nach der Befüllung des Gehäuses mit Hydraulikflüssigkeit noch eine für die Funktion notwendige Anreicherung mit Luftanteilen im Hydraulikraum stattfinden. Hierzu muss dieser Raum nach der Befüllung nach außen verschlossen werden.

Die Erfindung wird im Folgenden unter Bezugnahme auf die Zeichnung näher erläutert; in dieser zeigen:
- Fig. 1: eine geschnittene teilweise Darstellung einer beispielhaften Ausführungsform eines erfindungsgemäßen Gehäuses eines Antriebs für eine Tür oder ein Fenster
- Fig. 2: eine vergrößerte Darstellung der Hülse
- Fig. 3: eine vergrößerte geschnittene Darstellung der Hülse
- Fig. 4: eine schematische Querschnittsdarstellung mit der Funktion der Hülse in einem Labyrinth.

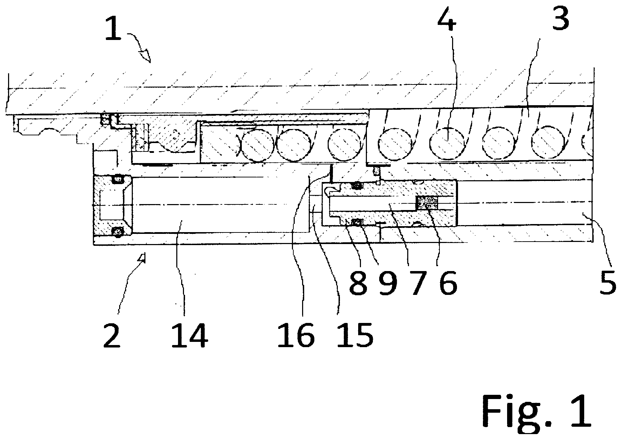

Der teilweise dargestellte Antrieb 1 in Fig. 1 umfasst ein Gehäuse 2 und eine in einem mit Hydraulikflüssigkeit gefüllten Hydraulikraum 3 des Gehäuses 2 liegende Feder 4, die dem Antrieb der Tür oder des Fensters dient.

Das Gehäuse 2 weist neben dem mit Hydraulikflüssigkeit gefüllte Hydraulikraum 3 auch noch einen Druckausgleichsraum 5 auf, welcher vom Hydraulikraum 3 durch einen druck- und/oder temperaturabhängigen Verschluss 6 getrennt ist. Im Brandfall kann es sein, dass auch im Gehäuse 2 eine hohe Temperatur und dadurch ein hoher Druck entstehen. Für diesen Fall ist vorgesehen, dass der Verschluss 6 öffnet und Hydraulikflüssigkeit zum Druckabbau in den Druckausgleichsraum 5 gelangen kann. Ein einfach funktionierender Verschluss 6 ist dabei durch eine Schmelzsicherung umgesetzt, deren Material sich durch die hohe Temperatur verändert und damit den Verschluss 6 freigibt.

Dieser Verschluss 6 ist in einer Durchgangsbohrung 7 einer Hülse 8 ausgebildet, die in das Gehäuse 2 eingesetzt und darin festgelegt ist. Zur Abdichtung zwischen dem Hydraulikraum 3 und dem Druckausgleichsraum 5 kann am Umfang der Hülse 8 eine Ringdichtung 9 wirken.

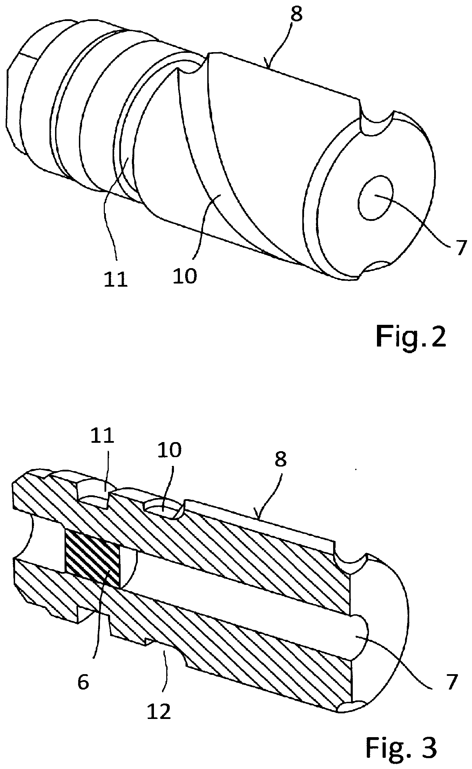

Die Figuren 2 und 3 zeigen die Hülse 8 im Detail. Diese weist zusätzlich zur Durchgangsbohrung 7 mit dem druck- und/oder temperaturabhängigen Verschluss 6 mindestens einen zusätzlichen Führungskanal 10 auf, durch den hindurch Hydraulikflüssigkeit und/oder Luft frei hindurchtreten können, und z.B. in einen Ringkanal 11 an der Hülse 8 oder in den Druckausgleichsraum 5 geführt werden, wodurch der Druck im Gehäuse 2 reguliert wird. Der Führungskanal 10 kann auch als Bohrung in der Hülse 8 ausgeführt sein. Dabei kann auch vorgesehen werden, dass der Führungskanal 10 ab einem bestimmten Druck oder einer bestimmten Temperatur im Gehäuse 2 diese Fluide aus dem Gehäuse 2 herausführt.

Der Führungskanal 10 oder auch mehrere Führungskanäle (10, 12) sind entlang der Erstreckung der Hülse 8 als Nut in diese eingearbeitet oder können auch gegenüberliegend der Hülse 8 im Gehäuse 2 oder in einem Gehäuseeinsatz ausgebildet werden.

Vorteilhaft ist es, mindestens zwei Führungskanäle 10, 12 vorzusehen, die in Richtung der Erstreckung der Hülse 8 in Umfangsrichtung versetzt zueinander angeordnet sind. Damit kann der Fluss der Hydraulikflüssigkeit wie auch der Luft wie benötigt gesteuert werden.

Bei einem Versatz der Führungskanäle 10, 12 entlang des Umfangs der Hülse 8 um 180° ist es zum Beispiel möglich, die Luft von unten nach oben zu leiten und die Hydraulikflüssigkeit von oben nach unten. Dies ist in der Fertigung einfach durch Führungskanäle 10, 12 mit einer Wendelform entlang der Erstreckung der Hülse 8 umzusetzen. Ein solches Gehäuse 2 ist dann auch um 180° gedreht einbaubar. Eine solche Lageunabhängigkeit ist beispielsweise bei einer alternativen Montage auf der Bandseite bzw. der Bandgegenseite einer Tür oder bei der wahlweisen Montage auf dem Flügel oder auf dem Rahmen der Tür wichtig.

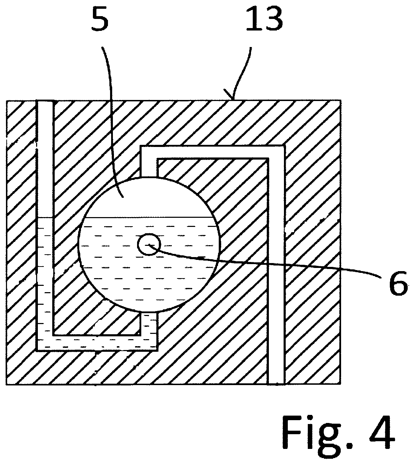

Die Fig. 4 zeigt schematisch den Aufbau eines Labyrinths 13 durch die Anordnung der Durchgangsbohrung 7 mit dem geöffneten Verschluss 6 und dem Stand der Hydraulikflüssigkeit bei erhöhtem Druck im Gehäuse 2 im Brandfall. Sollte der Druck im Gehäuse 2 steigen und sich dadurch der Stand der Hydraulikflüssigkeit in der Durchgangsbohrung 5 weiter erhöhen, kann Luft bzw. Hydraulikflüssigkeit über die Führungskanäle 10, 12 entweichen. Insoweit dieses Labyrinth 13 symmetrisch ausgebildet ist, kann es auch in einer um 180° gedrehten Lage des Antriebs gleich wirken, wodurch dieser deshalb für viele Einbaufälle geeignet ist.

Wie die Fig. 1 zudem zeigt, wird der Hydraulikraum 3 durch einen separat ausgebildeten Raum 14 und anschließende Kanäle 15, 16 hindurch mit Hydraulikflüssigkeit gefüllt und der separat ausgebildete Raum 14, welcher durch Hochstellen des Antriebs keine Hydraulikflüssigkeit sondern Luft enthält, wird hiernach verschlossen. Dieses definierte Luftvolumen kann sich dann mit der Hydraulikflüssigkeit mischen, wodurch die Funktion im Hydraulikraum 3 verbessert werden kann. Der separate Raum 14 kann auch als ansetzbares Teil des Gehäuses 2 ausgebildet sein.

### Bezugszeichenliste

- 1: Antrieb
- 2: Gehäuse
- 3: Hydraulikraum
- 4: Feder
- 5: Druckausgleichsraum
- 6: Verschluss
- 7: Durchgangsbohrung
- 8: Hülse
- 9: Ringdichtung
- 10: Führungskanal
- 11: Ringkanal
- 12: Führungskanal
- 13: Labyrinth
- 14: separater Raum
- 15: Kanal
- 16: Kanal

## Patentansprüche

1. Gehäuse (2) für einen Antrieb (1) einer Tür oder eines Fensters, mit einem mit Hydraulikflüssigkeit gefüllten Hydraulikraum (3) und einem Druckausgleichsraum (5), der vom mit Hydraulikflüssigkeit gefüllten Hydraulikraum (3) durch einen druck- und/oder temperaturabhängigen Verschluss (6) getrennt ist, wobei der Verschluss (6) in einer in das Gehäuse (2) einsetzbaren Hülse (8) in einer Durchgangsbohrung (7) vorgesehen ist,
**dadurch gekennzeichnet, dass** entlang der Hülse (8) mindestens ein zusätzlicher Führungskanal (10, 12) vorgesehen ist, durch den hindurch Hydraulikflüssigkeit und/oder Luft frei hindurchtreten kann und der ausgehend von der dem Druckausgleichsraum (5) zugewandten Kopfseite der Hülse (8) zur Weiterführung der Hydraulikflüssigkeit und/oder Luft aus dem Druckausgleichsraum (5) in einen Ringkanal (11) an der Hülse (8) oder einen aus dem Gehäuse führenden Kanal, mündet.

2. Gehäuse nach Anspruch 1,
**dadurch gekennzeichnet,**
**dass** der mindestens eine zusätzliche Führungskanal (10, 12) entlang der Erstreckung der Hülse (8) als Nut in diese eingearbeitet ist.

3. Gehäuse nach Anspruch 1,
**dadurch gekennzeichnet,**
**dass** der mindestens eine zusätzliche Führungskanal (10, 12) entlang der Erstreckung der Hülse (8) in das Gehäuse (2) oder in einen Gehäuseeinsatz eingearbeitet ist.

4. Gehäuse nach einem der vorherstehenden Ansprüche,
**dadurch gekennzeichnet,**
**dass** mindestens zwei Führungskanäle (10, 12) vorgesehen sind, die in Richtung der Erstreckung der Hülse (8) in Umfangsrichtung versetzt zueinander angeordnet sind.

5. Gehäuse nach Anspruch 4,
**dadurch gekennzeichnet,**
**dass** zwei Führungskanäle (10, 12) um 180° versetzt zueinander angeordnet sind.

6. Gehäuse nach einem der vorstehenden Ansprüche,
**dadurch gekennzeichnet,**
**dass** ein Führungskanal (10, 12) als Wendel entlang der Erstreckung der Hülse (8) verläuft.

7. Gehäuse nach einem der vorstehenden Ansprüche, **dadurch gekennzeichnet,**
**dass** mindestens zwei Führungskanäle (10, 12) ein Labyrinth (13) im Gehäuse bilden, von denen bei montiertem Gehäuse (2) einer einen Auslass nach oben sowie der andere einen Auslass nach unten umfasst.

8. Gehäuse nach Anspruch 7, **dadurch gekennzeichnet,**
**dass** das Labyrinth (13) symmetrisch ausgebildet ist.

9. Gehäuse nach Anspruch 1,
**dadurch gekennzeichnet,**
**dass** im Gehäuse (2) ein nach der Befüllung mit Hydraulikflüssigkeit mit einem definierten Luftvolumen gefüllter separat ausgebildeter Raum (14) vorgesehen ist, der mit dem Hydraulikraum (3) verbunden ist.

10. Gehäuse nach Anspruch 9, **dadurch gekennzeichnet,**
**dass** am inneren Ende des zusätzlichen Raums (14) ein Ansatz für die Befüllung des Gehäuses (2) mit Hydraulikflüssigkeit vorgesehen ist, und dass der zusätzliche Raum (14) nach der Befüllung am gegenüberliegenden Ende nach außen verschließbar ist.

## Claims

1. Housing (2) for a drive (1) of a door or of a window, having a hydraulic chamber (3), which is filled with hydraulic liquid, and a pressure-equalizing chamber (5) which is separated from the hydraulic chamber (3) filled with hydraulic liquid by a pressure- and/or temperature-dependent closure (6), wherein the closure (6) is provided in a through-hole (7) in a sleeve (8) which can be inserted into the housing (2),
**characterized in that**
at least one additional guide channel (10, 12) is provided along the sleeve (8) and through which hydraulic liquid and/or air can pass freely and which, starting from the head side of the sleeve (8) facing the pressure-equalizing chamber (5), opens into an annular channel (11) on the sleeve (8) or into a channel leading from the housing in order to further guide the hydraulic liquid and/or air from the pressure-equalizing chamber (5).

2. Housing according to Claim 1,
**characterized in that**
the at least one additional guide channel (10, 12) is incorporated along the extent of the sleeve (8) into the latter as a groove.

3. Housing according to Claim 1,
**characterized in that**
the at least one additional guide channel (10, 12) is incorporated along the extent of the sleeve (8) into the housing (2) or into a housing insert.

4. Housing according to one of the preceding claims,
**characterized in that**
the at least two guide channels (10, 12) are provided which are arranged offset to one another in the circumferential direction in the direction of the extent of the sleeve (8).

5. Housing according to Claim 4,
**characterized in that**
two guide channels (10, 12) are arranged offset to one another by 180°.

6. Housing according to one of the preceding claims,
**characterized in that**
a guide channel (10, 12) extends as a helix along the extent of the sleeve (8).

7. Housing according to one of the preceding claims,
**characterized in that**
at least two guide channels (10, 12) form a labyrinth (13) in the housing, of which, with the housing (2) mounted, one comprises an outlet in the upward direction and the other comprises an outlet in the downward direction.

8. Housing according to Claim 7,
**characterized in that**
the labyrinth (13) is of symmetrical design.

9. Housing according to Claim 1,
**characterized in that**
a separately formed chamber (14) which is filled with a defined air volume after the filling with hydraulic liquid is provided in the housing (2) and is connected to the hydraulic chamber (3).

10. Housing according to Claim 9,
**characterized in that**
an attachment for filling the housing (2) with hydraulic liquid is provided at the inner end of the additional chamber (14), and **in that** the additional chamber (14) can be closed to the outside at the opposite end after filling.

## Revendications

1. Boîtier (2) pour une commande (1) d'une porte ou d'une fenêtre, avec une chambre hydraulique (3) remplie d'un liquide hydraulique et une chambre d'équilibrage de pression (5), qui est séparée de la chambre hydraulique (3) remplie de liquide hydraulique par une fermeture (6) dépendant de la pression et/ou de la température, dans lequel la fermeture (6) est prévue dans une douille (8) insérable dans le boîtier (2) dans un alésage de passage (7), **caractérisé en ce qu'**il est prévu le long de la douille (8) au moins un canal de guidage supplémentaire (10, 12), à travers lequel du liquide hydraulique et/ou de l'air peut circuler et qui, partant du côté de tête de la douille (8) tourné vers la chambre d'équilibrage de pression (5), débouche dans un canal annulaire (11) sur la douille (8) ou dans un canal menant hors du boîtier pour la conduite du liquide hydraulique et/ou de l'air hors de la chambre d'équilibrage de pression (5).

2. Boîtier selon la revendication 1, **caractérisé en ce que** ledit au moins un canal de guidage supplémentaire (10, 12) est usiné le long de l'extension de la douille (8) sous forme de rainure dans celle-ci.

3. Boîtier selon la revendication 1, **caractérisé en ce que** ledit au moins un canal de guidage supplémentaire (10, 12) est usiné dans le boîtier (2) ou dans un insert de boîtier le long de l'extension de la douille (8).

4. Boîtier selon l'une quelconque des revendications précédentes, **caractérisé en ce qu'**il est prévu au moins deux canaux de guidage (10, 12), qui sont disposés dans la direction de l'extension de la douille (8) en décalage l'un par rapport à l'autre en direction périphérique.

5. Boîtier selon la revendication 4, **caractérisé en ce que** deux canaux de guidage (10, 12) sont disposés avec un décalage de 180° l'un par rapport à l'autre.

6. Boîtier selon l'une quelconque des revendications précédentes, **caractérisé en ce qu'**un canal de guidage (10, 12) s'étend sous forme d'hélice le long de l'extension de la douille (8).

7. Boîtier selon l'une quelconque des revendications précédentes, **caractérisé en ce qu'**au moins deux canaux de guidage (10, 12) forment un labyrinthe (13) dans le boîtier, parmi lesquels, lorsque le boîtier (2) est monté, l'un comprend une sortie vers le haut et l'autre comprend une sortie vers le bas.

8. Boîtier selon la revendication 7, **caractérisé en ce que** le labyrinthe (13) est de forme symétrique.

9. Boîtier selon la revendication 1, **caractérisé en ce qu'**il est prévu dans le boîtier (2) une chambre (14) formée séparément remplie avec un volume d'air défini après le remplissage avec du liquide hydraulique, laquelle est reliée à la chambre hydraulique (3).

10. Boîtier selon la revendication 9, **caractérisé en ce qu'**il est prévu à l'extrémité intérieure de la chambre supplémentaire (14) un ajout pour le remplissage du boîtier (2) avec un liquide hydraulique et **en ce que** la chambre supplémentaire (14) peut être fermée vers l'extérieur à l'extrémité opposée après le remplissage.
